# EUROPÄISCHE PATENTANMELDUNG

(11) **EP 1 319 693 A1**
(43) Veröffentlichungstag der Anmeldung: **18.06.2003**
(21) Anmeldenummer: 01129932.8
(22) Anmeldetag: 17.12.2001
(51) Int. Cl.: C09D 4/00, C08F 230/02, C09J 5/02

(54) **Oberflächenbehandlungsmittel für organische polymere Untergründe von polymerisierbaren aeroben (Meth)acrylatsystemen**

(71) Anmelder: Sika Schweiz AG, 8064 Zürich (CH)
(72) Erfinder: De Cooman, Ria, Dr., 6331 Hünenberg ZG (CH); Flury, René, 4056 Basel (CH)
(74) Vertreter: Isler, Jörg

(57) **Zusammenfassung**

Die Erfindung beschreibt Oberflächenbehandlungsmittel für aerobe (Meth)acrylatsysteme, umfassend ein oder mehrere Lösungsmitteln, ein oder mehrere (Meth)acrylatmonomere der Formel A, sowie eine oder mehrere Substanzen der Formel B: 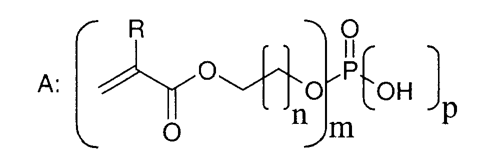 wobei R=H oder CH₃ und m=1-3, p=3-m und n=1-15 mit m, p und n =ganzzahlig ist. 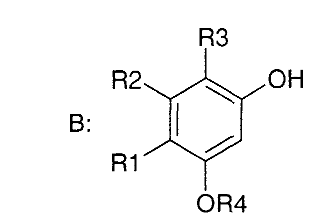 wobei R1, R2 und R3 je H, Alkyl, Cycloalkyl, Aryl, Alkylaryl, Alkenyl oder Halogen und R4 = H, Methyl oder Ethyl sind.

Weiterhin wird ein Oberflächenbehandlungsmittel für aerobe (Meth)acrylatsysteme beschrieben, welches aus einem oder mehreren Lösungsmitteln, einem oder mehreren (Meth)acrylatmonomeren der Formel A, einer oder mehreren Substanzen der Formel B, sowie einem oder mehreren weiteren (Meth)acrylatmonomeren besteht, die frei von phosphorhaltigen funktionellen Gruppen sind.

Weiterhin werden Artikel beschrieben, deren Oberfläche zumindest im Verbundbereich aus organischen Polymeren bestehen und mit einem beschriebenen Oberflächenbehandlungsmittel vorbehandelt wurden.

Weiterhin werden beschrieben ein Klebstoffsystem, beziehungsweise ein Dichtstoffsystem, bei welchem ein Artikel mittels eines aeroben (Meth)acrylatklebstoffes mit mindestens einem weiteren Artikel verklebt, beziehungsweise, bei welchem eine Öffnung in einem Artikel oder zwischen Artikeln mittels eines aeroben (Meth)acrylatdichtstoffes gegen flüssige oder gasförmige Stoffe verschlossen worden ist. Als besonders geeignete Varianten der Substanzen gemäss Formel B haben sich Derivate von Resorcin sowie deren Monoalkylether erwiesen.

## Beschreibung

### Technisches Gebiet und Stand der Technik

Die Erfindung betrifft Oberflächenbehandlungsmittel für die Erhöhung der Haftung von aeroben (Meth)acrylatsystemen auf organischen polymere Untergründen. Reaktive Systeme basierend auf (Meth)acrylaten weisen wesentliche Vorteile auf. Insbesondere können äusserst schnell reagierende Systeme formuliert werden und ausserdem weisen sie generell ein sehr gutes Haftspektrum auf. Solche reaktiven Systeme werden sehr vielfältig eingesetzt als Klebstoffe, Dichtstoffe, Lacke und andere Beschichtungsmittel. Es zeigt sich jedoch, dass die Haftung auf organischen Polymeren insbesondere Polyamid-Untergründen vielfach problematisch ist.

Auf Glas und Metallen werden zur Erhöhung der Haftung von Epoxidund Polyurethan-Klebstoffen und Beschichtungen vielfach Silane eingesetzt. Als Beispiel hierfür seien die Werke von Plueddemann erwähnt (Plueddemann E.P.in 'Silane Coupling Agents',Plenum Press,New York 1991 und Plueddemann E.P.in 'Silanes and other Coupling Agents',ed. Mital K.L.,VSP,Utrecht 1992).

Clark (1988 Fall Technical Mini-Seminar, November 2, Hyatt Regency Dearborn, Dearborn, Michigan / ASC, The Adhesive and Sealant Council, Inc, Washington, DC, S.27-37.) beschreibt in Bruchflächenuntersuchungen die vorteilhafte Verwendung von Methacryloxyethylphosphat und Bis(methacryloxyethylphosphat) als Primer für Zink, Aluminium und Stahl für anaerobe Methacrylatklebstoffe.

Ebenfalls einen Primer für anaerobe Klebstoffe beschreibt US 4,731,146, in dem Cu(II), Co(II), Mn(II), Mn(III) oder Cr(III) Salze eines sauren Phosphatmonomers in einem flüchtigen Lösungsmittel enthalten sind.

Die beschriebenen anaeroben (Meth)acrylatsysteme weisen den grossen Nachteil auf, dass sie nur für sehr kleine Schichtdicken, typischerweise Filme, geeignet sind. Als dickere Schicht aufgetragen weisen solche Klebstoffe dagegen schlechte mechanische Eigenschaften und als Folge davon sehr dürftige Haftung und auf.

Zur Verbesserung der Haftung von (Meth)acrylatklebstoffen auf Edelmetallen beschreibt US 6,265,508 eine Oberflächenbehandlungslösung, welche neben einem polymerisierbaren Phosphorsäureester-Monomer auch ein polymerisierbares Thiophencarbonsäureester-Monomer enthält.

Gewisse Lösungsmittel können für das Verkleben von organischen Polymeren alleine verwendet werden. Beispielsweise können mit Methylenchlorid behandelte Teile von Polymethylmethacrylat durch Kontakt und Druck miteinander verklebt werden. Diese unter dem Begriff des Diffusionsklebens bekannte Art gewisse Polymeren zu verkleben, ist jedoch stark eingeschränkt und weist grosse Nachteile auf. Da kein Klebstoff verwendet wird, müssen die Teile passgenau aufeinander angefertigt sein. Weiterhin funktioniert diese Verklebung nur mit Lösungsmittel, welche sehr gut im organischen Polymer löslich sind, was dazu führt, dass auch nach erfolgter Verklebung sehr viel Lösungsmittel im Polymer speziell an der Kleb-Grenzfläche vorhanden ist, was zu einer lokalen Schwächung der mechanischen Eigenschaften des Polymers führt. Des weiteren wird sehr lange Zeit benötigt, bis der Klebverbund die Endfestigkeit erreicht. Schliesslich sind die verwendeten Lösungsmittel aus ökologischen und arbeitshygienischen Gründen unerwünscht.

Als Vorbehandlungsmethode zur Haftverbesserung auf Polyamiden wird von G. Habenicht (,Kleben', Springer Verlag, Berlin, 1997, S. 615) konzentrierte Ameisensäure oder eine Ameisensäure-Polyamid Lösung empfohlen. Diese Vorbehandlung weist allerdings erhebliche Beschränkungen sowohl im Hinblick auf die Stabilität als auch die Arbeitssicherheit auf.

Es sind (Meth)acrylatsysteme bekannt, welche als anaerob bezeichnet werden. Hierbei handelt es sich um 1-komponentige System, welche nur unter Ausschluss von Sauerstoff und in Kontakt mit Metalloberflächen polymerisieren. Eine beispielhafte Verwendung hierfür sind Schraubensicherungen.

Als aerobe (Meth)acrylatsysteme werden 2-komponentige Systeme definiert, bei denen neben den mindestens in einer Komponente vorliegenden (Meth)acrylatmonomeren, beziehungsweise Mischungen derselben, in der einen Komponente mindestens ein Radikalstarter, typischerweise ein Peroxid, und in der anderen Komponente mindestens ein Beschleuniger enthalten ist. Im Gegensatz zu anaeroben Systemen werden hierbei dickschichtige Verklebungen, Beschichtungen und Dichtungen zugänglich.

### Aufgabe und Lösung

Es ist daher die Aufgabe dieser Erfindung, die beschriebenen Nachteile und Probleme der Oberflächenbehandlungsmittel für organische Polymere zu überwinden. Unerwartet wurde gefunden, dass die Nachteile des Standes der Technik durch erfindungsgemässe Oberflächenbehandlungsmittel gemäss Anspruch 1 oder 2 behoben werden konnten. Insbesondere kann durch das erfindungsgemässe Oberflächenbehandlungsmittel für organische Polymere eine exzellente Haftung von aeroben (Meth)acrylatsystemen auf Polymeren erzielt werden, so dass der Verbund eines (Meth)acrylatsystems und eines Polymeren vorwiegend kohäsiv innerhalb des (Meth)acrylatsystems bricht. Als besonders gut geeignet hat sich das Oberflächenbehandlungsmittel für Polyamide erwiesen.

### Zusammenfassung der Erfindung

Die vorliegende Erfindung betrifft Oberflächenbehandlungsmittel für aerobe (Meth)acrylatsysteme, welche ein oder mehrere Lösungsmittel sowie ein oder mehrere (Meth)acrylatmonomere der Formel A, sowie eine oder mehrere Substanzen der Formel B umfassen oder aus einem, beziehungsweise mehreren Lösungsmitteln, einem, beziehungsweise mehreren (Meth)acrylatmonomeren der Formel A, eine oder mehrerem Substanzen der Formel B, sowie einem oder mehreren, weiteren von phosphorhaltigen funktionellen Gruppen freien (Meth)acrylatmonomeren bestehen. Bevorzugt werden Lösungsmittel ausgewählt aus der Gruppe der chlorierten Kohlenwasserstoffe, Ester, Alkohole und Ketone mit Siedepunkten <130°C. Insbesondere geeignet sind Aceton und Isopropanol. Als besonders geeignete Varianten der (Meth)acrylatmonomeren gemäss Formel A haben sich 2-Methacryloyloxyethylphosphat, Bis(2-Methacryloyloxyethyl)phosphat sowie Tris (2-Methacryloyloxyethyl)phosphat, beziehungsweise Mischungen derselben erwiesen. Als besonders geeignete Varianten der Substanzen gemäss Formel B haben sich Derivate von Resorcin sowie deren Monoalkylether erwiesen.

### Ausführliche Beschreibung der Erfindung

Die vorliegende Erfindung betrifft Oberflächenbehandlungsmittel für aerobe (Meth)acrylatsysteme, welche ein oder mehrere Lösungsmittel sowie ein oder mehrere (Meth)acrylatmonomere der Formel A, sowie eine oder mehrere Substanzen der Formel B umfassen oder aus einem, beziehungsweise mehreren Lösungsmitteln, einem, beziehungsweise mehreren (Meth)acrylatmonomeren der Formel A, einer oder mehrerer Substanzen der Formel B, sowie einem oder mehreren, weiteren von phosphorhaltigen funktionellen Gruppen freien (Meth)acrylatmonomeren bestehen: 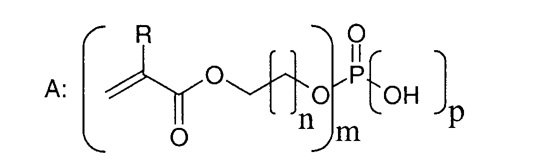 Mit R=H oder CH₃, m=1-3, p=3-m und n=1-15. 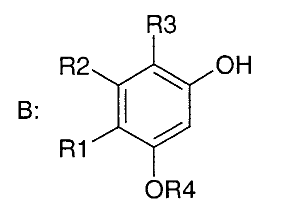 wobei R1, R2 und R3 je H, Alkyl, Cycloalkyl, Aryl, Alkylaryl, Alkenyl oder Halogen und R4 = H, Methyl oder Ethyl sind.

Das verwendete Lösungsmittel weist bei Normalbedingungen einen Siedepunkt < 130°C auf. Vorzugsweise wird ein Lösungsmittel mit Siedepunkt <100°C, besonders bevorzugt <90°C, verwendet. Als Lösungsmittel geeignet sind beispielsweise chlorierte Kohlenwasserstoffe, wie Methylenchlorid, 1,2 Dichlorethan, 1,2-Dichlorethan, 1,1,1-Trichlorethan oder Trichlorethylen, Ester, wie Butylacetat, Propylacetat, Ethylacetat, Ethylformiat oder Butylformiat, Alkohole, wie Methanol, Ethanol, n-Propanol, Isopropanol oder Butanol aber auch Alkoxyalkohole wie Alkoxypropanol, Ethylenglykolmonomethylether, Ethylenglykoldiethylether oder Propylenglykolmonomethylether und Ketone wie Diethylketon, Methylethylketon oder Methylpropylketon. Als besonders geeignet haben sich Isopropanol und Aceton erwiesen.

Das erfindungsgemässe Oberflächenbehandlungsmittel enthält (Meth)acrylatmonomeren der Formel A

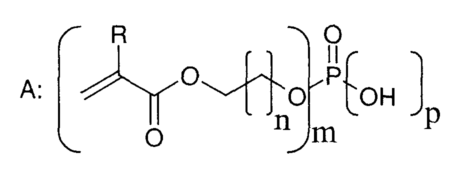

Der Rest R stellt hierbei ein H oder eine Methylgruppe dar, wobei die Methylgruppe bevorzugt wird. Die Monomeren umfassen Moleküle mit n von 1 bis 15, bevorzugt werden solche mit n von 1 bis 3. Beispiele hierfür sind 2-(Meth)acryloyloxyethylphosphat, 4-(Meth)acryloyloxybutylphosphat, 6-(Meth)acryloyloxyhexylphosphat, 8-(Meth)acryloyloxyoctylphosphat, 10-(Meth)acryloyloxydecylphosphat, 16-(Meth)acryloylhexadecylphosphat. Bevorzugt sind Moleküle mit n=1.

Entsprechend den Indizes m=1-3 und p=0-2, sind alle möglichen Kombinationen denkbar, wobei mindestens ein (Meth)acrylatrest vorhanden sein muss. Bevorzugte Monomere sind 2-Methacryloyloxyethylphosphat, Bis(2-Methacryloyloxyethyl)phosphat sowie Tris (2-Methacryloyloxyethyl)phosphat. Aufgrund der Herstellung dieser Monomeren können selbstverständlich auch noch Spuren von Phosphorsäure als Verunreingung vorhanden sein.

In bestimmten Fällen können auch noch andere (Meth)acrylatmonomere vorhanden sein, welche frei von phosphorhaltigen funktionellen Gruppen sind. Insbesondere handelt es sich hierbei um Monomere ausgewählt aus der Gruppe von Trimethylolpropantriacrylat sowie ethoxylierten und propoxylierten (Meth)acrylaten. Die ethoxylierten und propoxylierten (Meth)acrylate können eine oder mehrere (Meth)acrylat-Gruppen enthalten, wobei eine bis drei bevorzugt sind. Besonders bevorzugt sind ethoxyliertes Trimethylolpropantriacrylat, propoxyliertes Neopentylglycoldi(meth)acrylat sowie ethoxyliertes Ethyl(meth)acrylat, beispielsweise 2-(2-Ethoxyethoxy)ethylacrylat. (Meth)acrylatmonomeren der Formel A sind als Mischung mit solchen (Meth)acrylatmonomeren kommerziell üblich.

Diese (Meth)acrylatmonomeren, welche frei von phosphorhaltigen funktionellen Gruppen sind, können in einer Konzentration von 0 - 20 Gewichts-%, insbesondere 0 - 10 Gewichts-% vorkommen, bezogen auf die gesamte Formulierung.

Eine bevorzugte Ausführungsform des Oberflächenbehandlungsmittels enthält (Meth)acrylatmonomere der Formel A in einer Konzentration von 1 - 10 Gewichts-%, besonders bevorzugt 2 - 7 Gewichts-%, bezogen auf die gesamte Formulierung.

Das erfindungsgemässe Oberflächenbehandlungsmittel enthält Substanzen der Formel B:

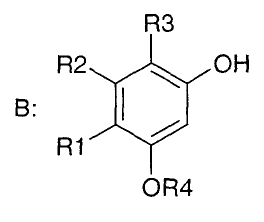

Die Reste R1, R2 und R3 stellen H, Alkyl Cycloalkyl, Aryl, Alkenyl oder Halogen und R4 = H, Methyl oder Ethyl dar. R1 und R2 und R3 können individuell unterschiedlich, paarweise gleich oder alle gleich sein. Die Substituenten R1, R2 und R3 können durchaus aber auch miteinander verbrückt sein, und gesättigten, ungesättigten oder aromatischen Charakter aufweisen, wie beispielsweise bei 1,3 -Dihydroxynaphthalin oder 1,3-Dihydroxy-5,6,7,8-Tetrahydronaphthalin. In einer weiteren bevorzugte Variante stellen die Substituenten R1=R3=H und R2 = H oder Alkyl insbesondere H oder Alkyl der Kettenlänge von C1 bis C12 dar. Besonders bevorzugt sind auch die Monomethylether. Als besonders geeignet hat sich Resorcin (1,3-Dihydroxybenzol) erwiesen (R1=R2=R3=R4=H).

Die Substanzen der Formel B können alleine oder als Mischung im Oberflächenbehandlungsmittel vorkommen. Die Konzentration der Substanz gemäss der Formel B beträgt, bezogen auf die gesamte Formulierung, 1 - 10 Gewichts-%, bevorzugt 2 - 7 Gewichts-%.

Eine bevorzugte Ausführungsform des Oberflächenbehandlungsmittels kann Organosilizium-Verbindungen enthalten. Diese umfassen Verbindungen der Formel C

C: X-Si(OM)ₐX'_{b}

mit M= Methyl oder Ethyl, X=C1-C18- Alkyl, -Alkylen, 3-(Meth)acryloyloxypropyl, (Meth)acryloyloxyalkylpropyl, oder 3-Glycidyloxypropyl 3-Mercaptopropyl, X'=H oder CH3, und a=1-3 und b=3-a. Bevorzugt sind die Verbindungen Vinyltrimethoxysilan, Vinyltriethoxysilan, 3-(Meth)acryloyloxypropyltrimethoxysilan, 3-(Meth)acryloyloxypropyltriethoxysilan, 3-Mercaptopropyltrimethoxysilan und 3-Mercaptopropyltriethoxysilan.

Der Gehalt an Organosilizium-Verbindung beträgt bevorzugt 0 - 2 Gewichts-%, insbesonders 0 - 1 Gewichts-%, bezogen auf die gesamte Formulierung.

Eine bevorzugte Ausführungsform des Oberflächenbehandlungsmittels kann ausserdem dem Fachmann bekannte Hilfsstoffe wie Additive und Stellmittel enthalten.

Weiterhin bezieht sich die Erfindung auf einen Artikel, dessen Oberfläche zumindest im Verbundbereich aus organischen Polymeren besteht und der mit einem vorstehend beschriebenen Oberflächenbehandlungsmittel vorbehandelt wurde. Der Artikel kann vollständig aus organischen Polymeren bestehen, oder alternativ mit organischen Polymeren beschichtet, verklebt oder auf andere Weise verbunden sein. Der Ausdruck "Organisches Polymer" umfasst dabei hier Polymere und Copolymere wie auch Blends von Epoxidharzen, Carbonaten, (Meth)acrylaten, Acrylonitril, Styrol, Vinylchlorid, Butadien, Estern und Amiden. Bevorzugt sind Polyamide, insbesondere Polyamid 6, Polyamid 6.6, Polyamid 11 und Polyamid 12, sowie deren Mischungen.

Auch auf gewissen Metalluntergründen kann mit dem Oberflächenbehandlungsmittel unter Umständen eine verbesserte Haftung erfolgen. Besonders geeignet hat sich das Oberflächenbehandlungsmittel für galvanisierten und verzinkten Stahl erwiesen.

Das Oberflächenbehandlungsmittel wird auf den Artikel aufgetragen. Der Auftrag kann durch Aufsprühen, Eintauchen, Abwischen mit getränkten Trägermaterialien wie Tüchern, Watten, Rollen, Pinsel, Schwämmen und dergleichen erfolgen. Der Auftrag des Oberflächenbehandlungsmittels soll zumindest in dem Bereich erfolgen, in welchem der Klebstoff oder der Dichtstoff anschliessend appliziert werden soll. Um einen möglichst guten Haftverbund zu erhalten, soll der Auftrag des Oberflächenbehandlungsmittels möglichst vollständig und gleichmässig auf der zu verbindenden Fläche erfolgen. Zwischen dem Auftragen des Oberflächenbehandlungsmittels und der Applikation des Klebstoffs oder Dichtstoffes verstreicht eine gewisse Zeit, während der das Lösungsmittel verdunsten kann. Eine zu kurze Offenzeit ist zu vermeiden, da das überschüssige Lösungsmittel die mechanischen Eigenschaften des Klebstoffs oder des Dichtstoffes negativ beeinflusst. Typischerweise beträgt die Offenzeit für das erfindungsgemässe Oberflächenbehandlungsmittel zwischen 30 Sekunden und einigen Stunden. Nach dem Ablüften des Oberflächenbehandlungsmittels wird auf diesem ein aerober Klebstoff oder ein aerober Dichtstoff in einer dem Fachmann bekannten Art aufgetragen.

Als aerobe (Meth)acrylatsysteme werden 2-komponentige Systeme definiert, bei denen neben den mindestens in einer Komponente vorliegenden (Meth)acrylatmonomeren, beziehungsweise Mischungen derselben, in der einen Komponente mindestens ein Radikalstarter, typischerweise ein Peroxid, und in der anderen Komponente mindestens ein Beschleuniger enthalten ist. Im Gegensatz zu anaeroben Systemen werden hierbei dickschichtige Verklebungen, Beschichtungen und Dichtungen ermöglicht.

Solche aeroben Klebstoffe und Dichtstoffe sind zwei-komponentig. Die Acrylat- und/oder Methacrylat-Monomeren, beziehungsweise Mischungen derselben, können in beiden Komponenten vorkommen. Es ist aber auch durchaus möglich, dass sie nur in einer Komponente vorkommen. In der einen Komponente ist mindestens ein Beschleuniger und in der zweiten Komponente mindestens ein Radikalstarter, üblicherweise ein Peroxid, vorhanden. Beide Komponenten werden vor Gebrauch gemischt.

Ein Klebstoff wird auf das abgelüftete Oberflächenbehandlungsmittel aufgetragen und daraufhin mit mindestens einem zweiten Artikel verbunden. Falls die Oberfläche dieses Artikels ebenfalls aus organischen Polymeren besteht, ist es von Vorteil, wenn diese Oberfläche zumindest im Verbundbereich vorher mit Oberflächenbehandlungsmittel vorbehandelt wurde. Falls die Oberfläche des weiteren Artikels nicht aus organischen Polymeren besteht, kann auf eine derartige Vorbehandlung gegebenenfalls verzichtet werden. Alternativ kann dann allerdings auch eine andere Art von Oberflächenbehandlung hierfür nötig sein.

Im Rahmen einer Anwendung als Dichtstoff ist eine Öffnung in einem Artikel oder zwischen mehreren Artikeln derart zu schliessen, dass nach der Polymerisation des Dichtstoffs der Ein- oder Austritt von Flüssigkeiten oder Gasen durch den Artikel hindurch unterbunden ist. Falls die Oberfläche des weiteren Artikels ebenfalls aus organischen Polymeren besteht, ist es von Vorteil, wenn sie zumindest im Verbundbereich ebenfalls mit Oberflächenbehandlungsmittel vorbehandelt wurde. Falls die Oberfläche des weiteren Artikels nicht aus organischen Polymeren besteht, kann auf eine solche Vorbehandlung gegebenenfalls verzichtet werden, oder aber es kann eine andere Art von Oberflächenbehandlung hierfür nötig sein.

### Beispiele

### Zusammensetzung von beispielhaften Oberflächenbehandlungsmittel

Es wurden die folgenden Zusammensetzungen auf der Basis von Isopropanol und dem Haftvermittler Sartomer SR 9050 (kommerzielle Mischung einer 50%ige Lösung von Formel A in einem (Meth)acrylat, erhältlich von Sartomer/Cray Valley) sowie einer Substanz gemäss der Formel B hergestellt:

**Tabelle 1:**

| Zusammensetzungen von Oberflächenbehandlungsmittel | | | | | | | |
|---|---|---|---|---|---|---|---|
| | Zusammensetzungen in Gewichts-% | | | | | | |
| Bezeichnung | Ref. | OM-3 | OM-A1 | OM-A2 | OM-A3 | OM-A4 | OM-A5 |
| IPA | 100 | 94 | 94 | 94 | 94 | 94 | 94 |
| SR 9050 | - | 6 | 3 | 3 | 2 | 2 | 2 |
| Resorcin | - | - | 3 | - | 3 | 3 | 3 |
| Resorcinmonomethyl-ether | - | - | - | 3 | - | - | - |
| 3-Glycidyloxypropyltrimethoxysilan | - | - | - | - | 1 | - | - |
| 3-(Meth)acryloyloxypropyltrimethoxysilan | - | - | - | - | - | 1 | - |
| 3-Mercaptopropyltrimethoxysilan | - | - | - | - | - | - | 1 |
| Summe | 100 | 100 | 100 | 100 | 100 | 100 | 100 |

### Untergründe

Es wurden die folgenden Untergründe im Handel erhältlich von der Firma Rocholl, Deutschland, verwendet:

| | |
|---|---|
| Polyamid 6 | 100*25 mm, 4 mm dick |
| Polyamid 6.6 | 100*25 mm, 4 mm dick |
| Polyamid 11 | 100*25 mm, 3 mm dick |
| Polyamid 12 | 100*25 mm, 4 mm dick |

### Oberflächenbehandlungsmittel-Applikation

Das Oberflächenbehandlungsmittel wurde auf die Polymere aufgetragen. Als Referenz wurde Isopropanol verwendet. Zwischen der Applikation des Oberflächenbehandlungsmittels und des Klebstoffs wurde mindestens 30 Sekunden gewartet.

### Klebstoff

Alle Messungen wurden mit dem Klebstoff SikaFast® 5211 (kommerziell erhältlich von Sika AG, Schweiz) verwendet. Es handelt sich hierbei um einen schnell aushärtenden flexiblen 2 komponentigen Klebstoff, dessen Komponente A im Wesentlichen aus (Meth)acrylatmonomeren und Komponente B aus einem Peroxid besteht. Der Klebstoff wurde mittels einer Kartuschenpistole und mit Statikmischer vorgemischt und appliziert.

### Prüfkörperherstellung

Aus 2 Polymerstücken wurden Zugscherfestigkeitsprüfkörper gemäss DIN EN 1465 erstellt. Die Überlappung betrug 12.5 mm, Schichtdicke des Klebstoffs 1.5 mm.

### Prüfung

Die Zugscherfestigkeit wurde auf einer Zwick Apparatur mit einer Zuggeschwindigkeit von 10 mm/min nach DIN EN 1465 circa einen Tag nach Applikation des Klebstoffes gemessen.

Bei Messungen nach Kataplasma wurde der Probekörper in ein feuchtes Tuch eingewickelt, in einen Plastikeimer gelegt, in welchem zusätzlich ein offenes, mit Wasser gefülltes Gefäss vorhanden ist. Der Eimer wurde dicht verschlossen und während 7 Tagen bei 70°C gelagert. Anschliessend wurden die Probekörper aus dem feuchten Tuch herausgenommen, mit einem Papiertuch oberflächlich abgetrocknet und bei Raumtemperatur abgekühlt und innerhalb eines Tages geprüft.

### Resultate

In Tabelle 2 sind die Resultate zusammengestellt, welche den Einfluss des Oberflächenbehandlungsmittels bei Raumtemperatur auf die Zugscherfestigkeiten zeigen. Hierbei ist einerseits auf den Effekt des Oberflächenbehandlungsmittels auf die Erhöhung der Haftung und andererseits auf die Verbesserung des Bruchbildes zu verweisen vor allem nach der Kataplasma-Lagerung.

**Tabelle 2:**

| Zugscherfestigkeiten auf unbehandelten, beziehungsweise behandelten Polymeren [MPa]* | | | | | | | |
|---|---|---|---|---|---|---|---|
| | Ref. | OM-3 | OM-A1 | OM-A2 | OM-A3 | OM-A4 | OM-A5 |
| PA-6 | 3 (adh.) | 5 (Misch.) | 8 (koh.) | 8 (koh.) | 9 (koh.) | 9 (koh.) | 9 (koh.) |
| PA-6 Kataplasma | 3 (adh.) | 3 (adh.) | 4 (koh.) | 5 (koh.) | 4 (koh.) | 3 (Misch.) | 6 (koh.) |
| PA-6.6 | 5 (adh.) | 8 (Misch.) | 10 (Misch.) | 10 (Misch.) | 10 (Misch.) | 10 (Misch.) | 10 (koh.) |
| PA-6.6 Kataplasma | 1 (adh.) | 1 (adh.) | 5 (koh.) | 5 (koh.) | | | |
| PA-11 | 1 (adh.) | | | | | | 6 (koh.) |
| | | | | | | | |

| | | | | | | | |
|---|---|---|---|---|---|---|---|
| * Legende: adh.=adhäsiv koh.=kohäsiv Misch.=Mischbruch | | | | | | | |

## Patentansprüche

1. Oberflächenbehandlungsmittel für aerobe (Meth)acrylatsysteme, umfassend
- ein oder mehrere Lösungsmittel
- sowie ein oder mehrere (Meth)acrylatmonomere der Formel A: 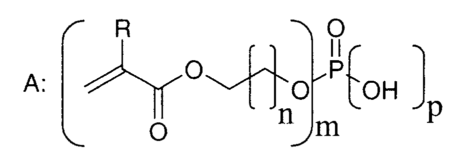 wobei R=H oder CH₃ und m=1-3, p=3-m und n=1-15 mit m, p und n =ganzzahlig ist;
- sowie eine oder mehrere Substanzen der Formel B: 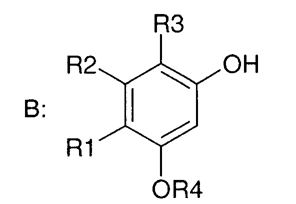 wobei R1, R2 und R3 je H, Alkyl, Cycloalkyl, Aryl, Alkylaryl, Alkenyl oder Halogen und R4 = H, Methyl oder Ethyl sind.

2. Oberflächenbehandlungsmittel für aerobe (Meth)acrylatsysteme, bestehend aus
- einem oder mehreren Lösungsmitteln
- sowie einem oder mehreren (Meth)acrylatmonomeren der Formel A: 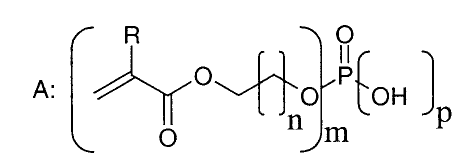 wobei R=H oder CH₃ und m=1-3, p=3-m und n=1-15 mit m, p und n =ganzzahlig ist;
- sowie einer oder mehreren Substanzen der Formel B: 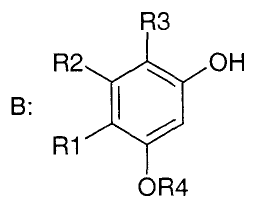 wobei R1, R2 und R3 je H, Alkyl, Cycloalkyl, Aryl, Alkylaryl, Alkenyl oder Halogen und R4 = H, Methyl oder Ethyl sind;
- sowie einem oder mehreren weiteren, von phosphorhaltigen funktionellen Gruppen freien (Meth)acrylatmonomeren.

3. Oberflächenbehandlungsmittel gemäss Anspruch 2, **dadurch gekennzeichnet, dass** die von phosphorhaltigen funktionellen Gruppen freien (Meth)acrylatmonomere ausgewählt sind aus der Gruppe, bestehend aus von Trimethylolpropantriacrylat, ethoxylierten und propoxylierten (Meth)acrylaten, bevorzugt Trimethylolpropantriacrylat, ethoxyliertes Trimethylolpropantriacrylat, propoxyliertes Neopentylglycoldi(meth)acrylat und ethoxyliertes Ethyl(meth)acrylat, besonders bevorzugt 2-(2-Ethoxyethoxy)ethylacrylat.

4. Oberflächenbehandlungsmittel gemäss Anspruch 2 oder 3, **dadurch gekennzeichnet, dass** die weiteren, von phosphorhaltigen funktionellen Gruppen freien (Meth)acrylatmonomere, zu einem Anteil im Bereich von 0 - 20 Gewichts-%, bevorzugt 0 - 10 Gewichts-%, bezogen auf die gesamte Formulierung, vorhanden sind.

5. Oberflächenbehandlungsmittel gemäss einem der vorstehenden Ansprüche, **dadurch gekennzeichnet, dass** das Lösungsmittel einen Siedepunkt bei Normalbedingungen < 130°C, vorzugsweise <100°C, insbesondere <90°C aufweist.

6. Oberflächenbehandlungsmittel gemäss einem der vorstehenden Ansprüche, **dadurch gekennzeichnet, dass** das Lösungsmittel ein Keton oder ein Alkohol ist.

7. Oberflächenbehandlungsmittel gemäss einem der vorstehenden Ansprüche, **dadurch gekennzeichnet, dass** das Lösungsmittel Isopropanol ist.

8. Oberflächenbehandlungsmittel gemäss einem der vorstehenden Ansprüche, **dadurch gekennzeichnet, dass** in der Formel A n=1-3, bevorzugt n=1 ist.

9. Oberflächenbehandlungsmittel gemäss einem der vorstehenden Ansprüche, **dadurch gekennzeichnet, dass** in der Formel A R= CH₃ ist.

10. Oberflächenbehandlungsmittel gemäss einem der vorstehenden Ansprüche, **dadurch gekennzeichnet, dass** die Konzentration des (Meth)acrylatmonomeren der Formel A 1-10 Gewichts-%, bevorzugt 2-7 Gewichts-% beträgt, bezogen auf die gesamte Formulierung.

11. Oberflächenbehandlungsmittel gemäss einem der vorstehenden Ansprüche, **dadurch gekennzeichnet, dass** in Formel B die Substituenten R1, R2 und R3 = H oder Alkyl insbesondere H oder Alkyl der Kettenlänge von C1 bis C12 sind.

12. Oberflächenbehandlungsmittel gemäss einem der vorstehenden Ansprüche, **dadurch gekennzeichnet, dass** in Formel B die Substituenten R1=R3=H und R2 = H oder Alkyl insbesondere H oder Alkyl der Kettenlänge von C1 bis C12 sind.

13. Oberflächenbehandlungsmittel gemäss einem der vorstehenden Ansprüche, **dadurch gekennzeichnet, dass** in Formel B der Substituent R4 = Methyl ist.

14. Oberflächenbehandlungsmittel gemäss einem der vorstehenden Ansprüche, **dadurch gekennzeichnet, dass** die Konzentration der Substanz der Formel B 1-10 Gewichts-%, bevorzugt 2-7 Gewichts-% beträgt, bezogen auf die gesamte Formulierung.

15. Oberflächenbehandlungsmittel gemäss einem der vorstehenden Ansprüche, **dadurch gekennzeichnet, dass** die Zusammensetzung eine Organosilizium-Verbindung enthält.

16. Oberflächenbehandlungsmittel gemäss Anspruch 15 , **dadurch gekennzeichnet, dass** die Konzentration der Organosilizium-Verbindung 0-2 Gewichts-%, bevorzugt 0-1 Gewichts-% beträgt, bezogen auf die gesamte Formulierung

17. Artikel, dessen Oberfläche zumindest im Verbundbereich aus einem organischen Polymeren, insbesondere Polyamid besteht, **dadurch gekennzeichnet, dass** er mit einem Oberflächenbehandlungsmittel gemäss einem der vorstehenden Ansprüche vorbehandelt wurde.

18. Artikel gemäss Anspruch 17, **dadurch gekennzeichnet, dass** das Polyamid Polyamid 6, Polyamid 6.6, Polyamid 11 oder Polyamid 12 beziehungsweise Mischungen daraus ist.

19. Klebstoffsystem, **dadurch gekennzeichnet, dass** ein Artikel gemäss einem der Ansprüche 17 - 18 mittels eines aeroben (Meth)acrylatklebstoffes mit mindestens einem weiteren Artikel verklebt worden ist.

20. Dichtstoffsystem, **dadurch gekennzeichnet, dass** eine Öffnung in einem Artikel gemäss einem der Ansprüche 17 - 18 oder zwischen zwei oder mehreren solchen Artikeln mittels eines aeroben (Meth)acrylatdichtstoffes gegen flüssige oder gasförmige Stoffe verschlossen worden ist.

21. Verfahren zur Verbesserung der Haftung auf organischern, polymeren Untergründen **gekennzeichnet durch** einen Schritt des Aufbringens eines Oberflächenbehandlungsmittels nach einem der Ansprüche 1-16 auf mindestens einer Oberfläche des besagten Untergrundes.
